# EUROPEAN PATENT APPLICATION

(11) **EP 0 665 699 A1**
(43) Date of publication of application: **02.08.1995**
(21) Application number: 95200056.0
(22) Date of filing: 11.01.1995
(51) Int. Cl.: H04Q 7/24, H04M 3/42

(54) **Method and system for radiocommunication set-up**

(30) Priority: 27.01.1994 NL 9400117
(71) Applicant: Koninklijke PTT Nederland N.V., NL-2509 CH The Hague (NL)
(72) Inventor: Hegeman, Johannes, NL-2612 KR Delft (NL)

(57) **Abstract**

The method for setting up a communication connection between a first party and a callable second party, which second party is provided with a radio-communication handset, offers the possibility of setting up the communication connection without a call signal such as, for example a paging signal, an internal network telephone number, having to be transmitted concomitantly, by setting up, in a memory, a relationship between the radio-communication handset and at least one section of a link which is situated between the first party and an exchange and by first of all reading out said memory in response to a code signal which originates from the radio-communication handset and which is detected via a telepoint base station and then routing on the basis of the relationship read out.

## Description

### A. Background of the invention

The invention relates to a method for setting up a communication connection between a first party and a callable second party, which second party is provided with a radio-communication handset, which method comprises the following steps of
- receiving an identification signal for identifying the radio-communication handset from the first party via an exchange,
- storing a relationship between the radio-communication handset and at least a section of a link situated between the first party and the exchange at a location in a memory in response to at least a section of the identification signal,
- activating a call transmitter for transmitting a call signal to the radio-communication handset in response to at least a section of the identification signal,
- receiving a code signal via a telepoint base station from the radio-communication handset, and
- setting up a connection between the telepoint base station and the exchange in response to the code signal.

Such a method is disclosed in EP 0 478 213 (in particular, Fig. 2). A first party (for example, a user having a fixed telephone connection) generates an identification signal for identifying a callable second party (a user having a radio-communication handset) which is received by an exchange which is connected to the first party (possibly via one or more other exchanges). Said exchange detects that the identification signal corresponds to a call number or a paging number and routes the connection which is open between the first party and the exchange to an exchange which is centrally situated and has so-called "holding points". Said centrally situated "holding point" exchange has a memory in which, in response to at least a section of the identification signal, a relationship is set up between the radio-communication handset and at least a section of a link situated between the first party and the centrally situated "holding point" exchange (or the number of the so-called "holding point"). A call transmitter or paging transmitter is then activated which transmits a call signal or paging signal which is intended for the radio-communication handset and which comprises a telephone number of the centrally situated "holding point" exchange. In response to receipt of the call signal or paging signal, the radio-communication handset transmits a code signal which comprises the telephone number of the centrally situated "holding point" exchange. A telepoint base station receives said code signal and routes it, in response thereto, to the centrally situated "holding point" exchange, where a search is made in the memory for the "holding point" with which the second party is to be connected. As soon as this has taken place, the connection between the first and the second party is set up and all the costs may be allocated to the first (calling) party.

This known method has, inter alia, the disadvantage that the telephone number of the centrally situated "holding point" exchange has to be concomitantly transmitted in the calling signal or paging signal and has then to be dialled by the second party. The provision of such a so-called internal network telephone number to a user is very disadvantageous from the point of view of telephone companies.

### B. Summary of the invention

The object of the invention is, inter alia, to provide a method of the type referred to in the introduction in which it is no longer necessary to add internal network telephone numbers to call signals or paging signals and to provide them to users.

For this purpose, the method according to the invention has the characteristic that the method comprises the following steps of consecutively
- reading out the location in the memory in response to the code signal, and
- setting up the connection between the telepoint base station and the exchange in response to the relationship.

By first reading out, in response to a code signal, a memory in which a relationship (between the radio-communication handset and at least a section of a link situated between the first party and an exchange) is found at a location, a communication connection can then be set up between the telepoint base station and the exchange on the basis of a cost distribution to be adjusted arbitrarily and without an internal network telephone number having to be disclosed. In this case, the code signal comprises identification information of the radio-communication handset and never comprises an internal network telephone number. As regards the connection between the first party and the exchange, there are two possibilities. Firstly, said connection might still be open because the first party has remained on the line, in which case the first party obtains direct contact with the second party as soon as the communication connection between the telepoint base station and the exchange has been set up (the section, associated with the relationship, of the link situated between the first party and the exchange is then formed, for example, by the number of the "holding point"). Secondly, the first party might already have interrupted the connection with the exchange, in which case, as soon as the communication connection between the telepoint base station and the exchange has been set up, a new connection has to be set up to the first party from the exchange (the section, associated with the relationship, of the link situated between the first party and the exchange is then, for example, formed by the number of the first party).

The invention is based, inter alia, on the insight that each radio-communication handset identifies itself at a telepoint base station before the actual communication takes place and that it is possible to trace the relationship between the radio-communication handset and at least a section of the link situated between the first party and the exchange in a memory on the basis of this identification information, after which only a routing from the telepoint base station to the exchange has to take place. In this connection, identification information and identification signals may be used either in a direct way or in a more indirect way via a translation table for their respective applications.

If modern exchanges, such as service switching points (SSPs) are used whose control can be taken over by a service control point (SCP) which is connected to a service data point (SDP) or data base, the use of a centrally situated "holding point" exchange is avoided because SSPs, possibly in combination with one or more SCPs, are also capable of coupling two open connections. Owing to this application, the connections routed via a centrally situated "holding point" exchange, which are consequently often inefficient, are avoided and an SDP is available as memory. Furthermore, in contrast to standard exchanges (which are only able to route), SSPs, possibly in combination with one or more SCPs, are capable of recognizing special service requests, such as call numbers, and are capable, in response thereto, of taking action, such as activating a call transmitter.

In GSM terminology, the memory might be a so-called home location register (HLR) in which the HLR which is to be selected is determined on the basis of the identification information of the radio-communication handset.

Of course, the invention is also applicable to situations in which the first party is likewise provided with a radio-communication handset, in which case said first party provided with a radio-communication handset must not, however, leave the range of his telepoint base station after generating the identification signal.

A first embodiment of the method according to the invention has the characteristic that the call signal comprises an indication signal of one type in the case of an identification signal of one type, which call signal comprises an indication signal of another type in the case of an identification signal of another type.

By providing a call signal or paging signal with an indication signal, the possibility is created of being able to indicate to the second party whether a call signal or paging signal should be responded to in a standard way (in the case of an indication signal of one type) or whether the call signal or paging signal should be responded to at a more advanced level (in the case of an indication signal of another type), or of the radio-communication handset being able to respond automatically in a standard way or at an advanced level or of a combination of the two options. An identification signal of one type comprises, for example, identification information of the second party and, in addition, the number of the first party or the internal network number of the exchange. An identification signal of another type comprises, for example, identification information of the second party and, moreover, an additional code generated by the first party (which indicates that the first party wishes to be accessed at an advanced level regardless of whether the connection between the first party and the exchange does or does not remain open or which indicates that the first party will keep the connection to the exchange open, in which case the first party should be accessed at an advanced level in any case) or a code which is generated by the exchange and which indicates whether the connection between the first party and the exchange remains open, which can be detected, for example, on the basis of a line current detection.

A second embodiment of the method according to the invention has the characteristic that the relationship is formed by a representation of at least a section of the link situated between the first party and the exchange, the location in the memory being determined by at least a section of the identification signal.

In this case, the relationship is formed, for example, by an internal network telephone number of a point in the exchange which is coupled to the link present between the first party and the exchange or by the number of the first party, and addressing of the memory takes place on the basis of at least a section of the identification signal for identifying the radio-communication handset. As a result, it is no longer necessary to read out the entire memory, but the location in the memory where the relationship is stored can be read out directly on the basis of at least a section of the identification signal which functions as address.

The invention furthermore relates to a telecommunication system comprising at least one exchange, at least one call transmitter coupled to the exchange, at least one telepoint base station coupled to the exchange and at least one memory, a first party being capable of being coupled to the exchange via a link and a callable second party who is provided with a radio-communication handset being capable of being coupled to the telepoint base station, which telecommunication system is provided with identification detection means for
- detecting an identification signal originating from the first party for identifying the radio-communication handset,
- storing a relationship between the radio-communication handset and at least a section of the link situated between the first party and the exchange at a location in the memory in response to at least a section of the identification signal,
- activating the call transmitter for transmitting a call signal to the radio-communication handset in response to at least a section of the identification signal,
and which telecommunication system is provided with code detection means for
- detecting a code signal originating from the radio-communication handset, and
- setting up a connection between the telepoint base station and the exchange in response to at least a section of the code signal.

In this case, the identification detection means will be present, for example, in the exchange which is coupled (possibly via one or more other exchanges) to the call transmitter or paging transmitter, to the tele-point base station and to at least one memory and which can be coupled via the link (possibly via one or more other exchanges) to the first party. If the identification signal is formed, for example, by 06-5xxxxx, the call transmitter or paging transmitter will be activated in response to 06-5 (xxxxx possibly determining via a translation table which radio-communication handset is being called) and, in response to 06-5, the relationship will, for example, be stored in the memory (xxxxx possibly determining by means of a translation table which relationship is stored in which way). The identification signal might also consist of a combination of a fixed number and codes to be dialled thereafter (such as xxxxx and/or a code for identifying the first party). The code detection means are situated, for example, in the telepoint base station or in an exchange coupled to the telepoint base station (in which case, the telepoint base station has to transmit at least a section of the code signal to said exchange). In this case, the code signal comprises at least identification information of the radio-communication handset.

The telecommunication system according to the invention has the characteristic that the telecommunication system is provided with means for consecutively
- reading out the location in the memory in response to the detection of the code signal, and
- setting up the connection between the telepoint base station and the exchange in response to the relationship.

These characterizing means are situated, for example, in the telepoint base station or in an exchange coupled to the telepoint base station (in which case the telepoint base station has to transmit at least a section of the code signal to said exchange), preferably in the immediate vicinity of the code detection means.

A first embodiment of the telecommunication system according to the invention has the characteristic that the telecommunication system is provided with indication signal generating means for
- generating, in the case of a detected identification signal of one type, an indication signal, associated with the call signal, of one type,
- generating, in the case of a detected identification signal of another type, an indication signal, associated with the call signal, of another type.

In this case, the indication signal generating means are situated, for example, in the exchange which is coupled (possibly via one or more other exchanges) to the call transmitter, to the telepoint base station and to at least one memory and which is coupled via the link (possibly via one or more other exchanges) to the first party. If the identification signal consists of a combination of a fixed number and codes to be dialled thereafter, one of said codes might, for example, indicate the identification signal of another type, and in another case, link detection means, for example, will actively monitor the line current variation of the link and if a line current is present, involve an identification signal of another type, for example by adding a code. Preferably, the indication signal generating means (and any link detection means) are situated in the immediate vicinity of the identification detection means.

A second embodiment of the telecommunication system according to the invention has the characteristic that the relationship is a representation of at least a section of the link between the first party and the exchange, the location in the memory being determined by at least a section of the identification signal.

In this case, the relationship is formed, for example, by an internal network telephone number of a point in the exchange which is coupled to the link present between the first party and the exchange, or by the number of the first party, and addressing of the memory takes place on the basis of at least a section of the identification signal for identifying the radio-communication handset. As a result, it is no longer necessary to read out the entire memory but the location in the memory where the relationship is stored can be read out directly on the basis of at least a section of the identification signal which functions as address.

If the call signal is a paging signal and the call transmitter a paging transmitter, the second party should have a paging receiver which might optionally be provided in the radio-communication handset. Another call signal, such as an infrared signal or an ultrasonic signal, which requires another call receiver to be optionally provided in the radio-communication handset is, however, also conceivable. Yet another call signal, such as a signal situated in the human audible or visible frequency range (a sound having one or more specific frequencies and/or specific on/off combinations, or a message spoken by a person or a computer, or a specific light signal) does not even require a special call receiver because the person can perceive said audible or visible signal with the hearing or with the eye. In particular, signals of the last-mentioned category will be applicable in a business environment.

The invention furthermore relates to a radio-communication handset provided with a call function and comprising
- transmitting/receiving means for radio communication with a telepoint base station and for transmitting a code signal to the telepoint base station, and
- receiving means for receiving a call signal.

The radio-communication handset according to the invention and provided with a call function has the characteristic that the radio-communication handset provided with a call function is provided with indication detection means for detecting an indication signal, associated with the call signal, of one type and for detecting an indication signal, associated with the call signal, of another type.

The indication detection means, which are preferably situated in the vicinity of the receiving means, offer the possibility of taking various actions depending on the detected indication signal, such as actually showing the number of the calling first party or the internal network number of the exchange (which number is to be dialled by the second party) via a display in the case of an indication signal of one type and not showing such numbers (because the calling first party is then to be accessed at the advanced level according to the invention by the second party, for example on the basis of a different code signal) in the case of an indication signal of another type.

A first embodiment of a radio-communication handset according to the invention and provided with a call function has the characteristic that the radio-communication handset provided with a call function is provided with indicator means for indicating, in the case of a detected indication signal of one type, said indication signal of one type and for indicating, in the case of a detected indication signal of another type, said indication signal of another type.

The second party is informed about the way in which the calling first party is to be accessed by means of the indicator means (such as a display, an LED etc.).

A second embodiment of the radio-communication handset according to the invention and provided with a call function has the characteristic that the radio-communication handset provided with a call function is provided with generating means for generating, in response to an indication signal of one type, the code signal of one type and for generating, in response to an indication signal of another type, the code signal of another type.

The code signal of one type comprises, for example, the identification information of the radio handset provided with a call function and the number, dialled by the second party, of the first party who is in this case accessed in a standard way, while the code signal of another type comprises, for example, the identification information of the radio handset provided with a call function and a fixed code. In response to said fixed code, the characterizing means of the telecommunication system according to the invention should then read out the location in the memory. Owing to the presence of the generating means, a second party (who is provided with a radio-communication handset provided with a call function) situated in the vicinity of a telepoint base station can be connected automatically to said first party without knowing an internal network number and without knowing the number of the first party.

Of course, the invention is also applicable to so-called telepoint-to-telepoint connections, two radio-communication handsets thus being mutually connected. A calling first party who is provided with a radio-communication handset has to generate the identification signal via a telepoint base station (possibly another telepoint base station) and then remain in the immediate vicinity of said telepoint base station, and the connection set up between the first party and the exchange might optionally be interrupted after the generation of the identification signal. An alternative system which makes this type of connections possible and in which, however, use is made of concomitantly transmitting internal network numbers in the call signal is described in WO 93/05604.

Another system which makes use of some inefficient "holding point" exchanges and of concomitantly transmitting the internal network telephone number of such an exchange in the call signal is described in WO 93/07704, in which case the term "meet me port" is used instead of the term "holding point".

### C. References

■ EP 0 478 213
■ WO 93/07704
■ WO 93/05604
■ NL 93/01094
■ NL 9400117

All the references are deemed to be incorporated in this application.

### D. Exemplary embodiment

The invention will be explained in greater detail by reference to an exemplary embodiment shown in the figures. In the figures:
Fig. 1 shows a telecommunication system according to the invention for application of a method according to the invention,
Fig. 2 shows a modern exchange for application in a telecommunication system according to the invention, and
Fig. 3 shows a radio-communication handset provided with a call function for use in a telecommunication system according to the invention.

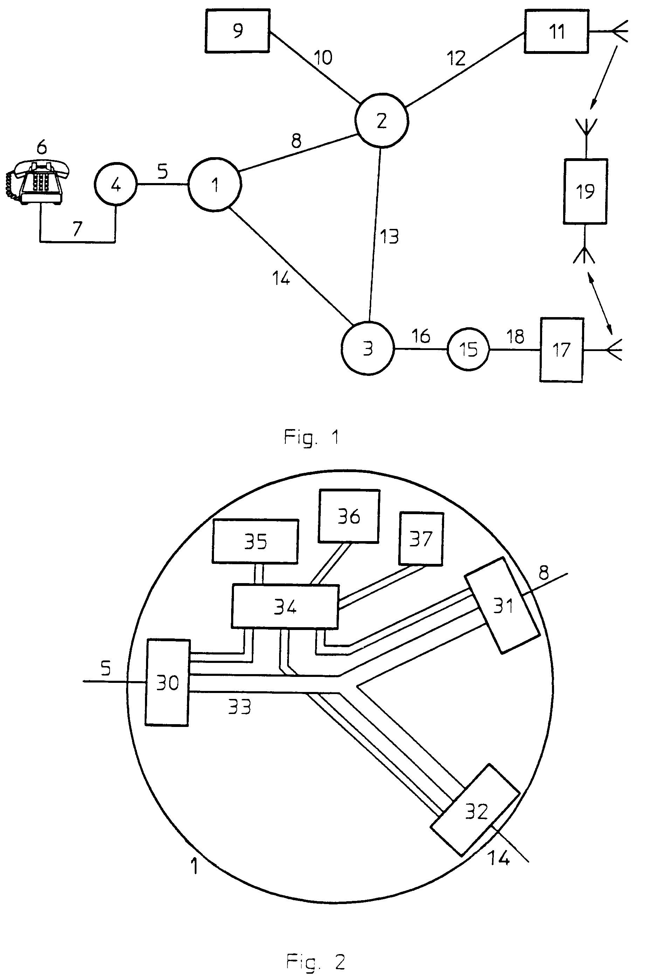

The telecommunication system according to the invention shown in Fig. 1 for application of a method according to the invention comprises a first modern exchange 1, a second modern exchange 2 and a third modern exchange 3, all three, for example, of the SSP (service switching point) type. Exchange 1 is connected via a connection 8 to exchange 2 and via a connection 14 to exchange 3, and exchange 2 is connected via a connection 13 to exchange 3. Exchange 1 is connected via a connection 5 to an old-fashioned exchange 4 which is coupled via a link 7 to a first party 6 (a subscriber having a permanently connected telephone set). Exchange 2 is connected via a connection 10 to a memory 9 and via a connection 12 to a call transmitter 11 (for example, a paging transmitter). Exchange 3 is connected via a connection 16 to an old-fashioned exchange 15 which is connected via a connection 18 to a telepoint base station 17. A second party has a radio-communication handset 19 provided with a call function (paging function) for receiving a paging signal from the paging transmitter 11 and for radio communication to and fro with telepoint base station 17. All the connections 5, 8, 10, 12, 13, 14 16 and 18 mentioned comprise various links.

The modern exchange 1 shown in Fig. 2 for application in a telecommunication system according to the invention comprises a distributor 30 connected to connection 5, a distributor 31 connected to connection 8 and a distributor 32 connected to connection 14. All three distributors 30, 31 and 32 are separately coupled to a processor 34 (which is furthermore coupled, for example, to an SCP, or service control point, not shown in Fig. 2, which SCP may be connected to memory 9 either via exchange 2 or directly) and are mutually coupled via a bus 33, processor 34 regulating the access of distributors 30, 31 and 32 to said bus 33. Processor 34 is furthermore coupled to a memory 35, to detection means 36 and means 37. Detection means 36 comprise
identification detection means for
- detecting an identification signal originating from the first party 6 for identifying the second party or communication handset 19,
- storing a relationship between the radio-communication handset 19 and at least a section of the link situated between the first party 6 and the exchange 1 (comprising link 7 and a link in connection 5) at a location in the memory 9 in response to at least a section of the identification signal,
- activating the paging transmitter 11 for transmitting a paging signal to the radio-communication handset 19 in response to at least a section of the identification signal,
code means for
- detecting a code signal originating from a radio-communication handset, and
- setting up a connection (comprising at least one link per connection) in response to at least a section of the code signal,
link detection means for
- detecting the disconnection of the link (comprising link 7 and a link in connection 5) between the first party 6 and the exchange 1, as a result of which a detected identification signal is defined as an identification signal of one type,
- detecting the presence of the link (comprising link 7 and a link in connection 5) between the first party 6 and the exchange 1, as a result of which a detected identification signal is defined as an identification signal of another type, and
indication signal generating means for
- generating an indication signal, associated with the call signal, of one type in the case of a detected identification signal of one type,
- generating an indication signal, associated with the call signal, of another type in the case of a detected identification signal of another type.
Means 37 are designed for consecutively
- reading out the location in the memory 9 in response to detecting the code signal, and
- setting up the connection (comprising at least one link per connection) in response to the relationship.
Exchange 2 and exchange 3 will be constructed similarly to exchange 1, any components not shown in the figures in exchanges 2 and 3, which correspond to components shown in Fig. 2 in exchange 1 being indicated in the text below by one and two primes respectively. Memory 9 might be completely identical to a memory 35' not shown in the figures and associated with exchange 2 or it might be an extension of such a memory 35' associated with exchange 2. It is also possible, however, that memory 9 is a memory which is added to exchange 2 and is coupled to a processor 34' which is not shown in the figures and is associated in a completely separate way with exchange 2.

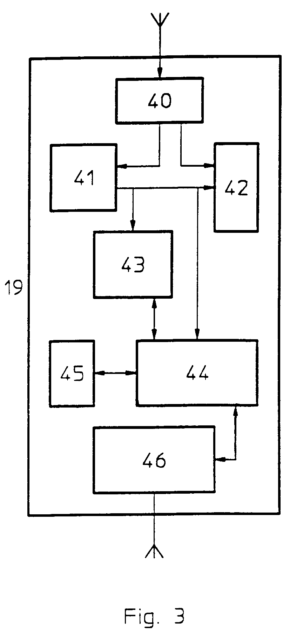

The radio-communication handset 19 shown in Fig. 3 and provided with a call function (paging function) for use in a telecommunication system according to the invention comprises receiving means 40 (a sema-phone receiver) for receiving a call signal (paging signal). Communication handset 19 furthermore comprises indication detection means 41, coupled to the paging receiver 40, for detecting an indication signal, associated with the paging signal, of one type, for example in the case of the disconnection of the link (comprising link 7 and a link in connection 5) between the party 6 calling the radio-communication handset 19 and the exchange 1, and for detecting an indication signal, associated with the paging signal, of another type, for example in the case of the presence of the link (comprising link 7 and a link in connection 5) between the party 6 calling the radio-communication handset 19 and the exchange 1. Communication handset 19 also has generating means 43, coupled to indication detection means 41, for generating, in response to an indication signal of one type, the code signal of one type and for generating, in response to an indication signal of another type, the code signal of another type. Indicator means 42 indicate the indication signal of one type in the case of a detected indication signal of one type and indicate, in the case of a detected indication signal of another type, said indication signal of another type. The indication signal and the code signal are both fed to a processor 44 which is coupled to a memory 45 and to transmitting/receiving means 46 which are used for radio communication with the telepoint base station 17 and for transmitting the code signal to the telepoint base station 17.

The operation is as follows. First party 6 dials, for example via a fixed telephone set, a telephone number 06-5xxxxx, of which the section 06-5 indicates that it relates to a paging number and of which xxxxx indicates which communication handset 19 should be called. In this case, the entire number 06-5xxxxx functions as an identification signal. Exchange 4 is only capable of routing said number received via link 7 through to exchange 1 via a link in connection 5. In exchange 1, the number is recognized by detection means 36 (which contain, inter alia, identification detection means) via distributor 30 and processor 34 as being an identification signal for a paging receiver 40, for example by means of the first three digits 06-5 as digital pulses to be compared with permanently stored pulses. After this recognition, the digits xxxxx are transmitted to exchange 2 via bus 33 and distributor 31 under the control of processor 34 via a data link in connection 8, together with, for example, an internal number of exchange 1 which indicates the link in connection 5 and distributor 30 via which the first party 6 is connected. In this context, said internal number thus forms the section of the link situated between first party 6 and exchange 1, there being present between said section and communication handset 19 the relationship, which is in this case formed by a cross-reference between the internal number and the digits xxxxx. In exchange 2, said internal number and the digits xxxxx are fed, under the control of a processor 34' not shown in the figures, via a data link in connection 10 to memory 9, where the internal number is stored, for example, at location xxxxx. Furthermore, the digits xxxxx are fed, under the control of a processor 34' not shown in the figures, via a data link in connection 12 to paging transmitter 11, which transmits the paging signal intended for paging receiver 40. Said paging signal comprises the digits xxxxx or a particular translation thereof for the purpose of identifying paging receiver 40. As an alternative, it is possible that the internal number and the digits xxxxx are fed to memory 9 via the SCP not shown in Fig. 2.

Detection means 36 (which comprise, inter alia, link detection means) detect, for example, the line current variation in the link between first party 6 and exchange 1 by arranging for said link to be scanned regularly by processor 34 via distributor 30 and comparing the scanned value thus obtained in detection means 36 with a fixed value. In response thereto, an indication signal of one type is generated by detection means 36 if the link is disconnected and an indication signal of another type is generated if the link is present. Said indication signal is added to the digits xxxxx by processor 34 and thus concomitantly transmitted to exchange 2 and paging transmitter 11 for the purpose of addition to the paging signal intended for paging receiver 40.

Paging receiver 40 in communication handset 19 receives said paging signal and filters the digits xxxxx (or the translation thereof) out of the paging signal, after which it is established by comparison whether said paging signal is intended for said paging receiver 40. If this is so, the paging signal is fed to indication detection means 41, which filter the indication signal out of the paging signal, after which it is established by comparison whether said indication signal is of one type or of another type. Said indication signal is fed to indicator means 42 such as, for example, an LED, which does not light up in response to an indication signal of one type and which does light up in response to an indication signal of another type. The indication signal is furthermore fed to generating means 43, which generate, in response to an indication signal of one type or of another type, a code signal of one type or another type, respectively. In the case of a code signal of one type (the link between first party 6 and exchange 1 is in that case disconnected), the telephone number of first party 6 should be dialled, for example, by the second party, which telephone number is, for example, already known to the second party, after which, via processor 44, the code signal of one type is transmitted via transmitting/receiving means 41. Said code signal of one type then comprises, for example, the number, dialled by the second party, of first party 6 together with, for example, identification information originating from memory 45, such as, for example, xxxxx. In the case of a code signal of another type (the link between first party 6 and exchange 1 is in that case still present), the code *56 should, for example, be dialled by the second party, after which, via processor 44, the code signal of another type is transmitted via transmitting/receiving means 41. Said code signal of another type then comprises, for example, the code *56 dialled by the second party, together with, for example, identification information originating from memory 45, such as, for example, xxxxx. It is also possible that generating means 43 automatically generate the code *56 in response to an indication signal of another type. What is important is the difference between code signals of one type (which contain the number of first party 6, as a result of which first party 6 is in fact called in a known manner), and code signals of another type (which comprise a special code, as a result of which a connection can be set up between the second party and the first party 6, who is still connected to exchange 1, at the expense of first party 6 without an internal network number having to be dialled by the second party).

Telepoint base station 17 receives the code signal of another type and transmits it via a link in connection 18 to exchange 15 which is only capable of routing the signal through via a link in connection 16 to exchange 3. Exchange 3 has detection means 36'' which are not shown in the figures (which comprise, inter alia, code detection means) and which recognize said code signal of another type by means of a processor 34'' not shown in the figures, for example by comparing the special code *56 as digital pulses with permanently stored pulses. Exchange 3 furthermore has means 37'' which are not shown in the figures and which, in response to the recognition, generate a code yyy which is related to exchange 3 and which, together with the digits xxxxx of the code signal of another type is transmitted, under the control of the processor 34'' not shown in the figures, to exchange 2 via a data link in connection 13. In exchange 2, said code yyy related to exchange 3 is detected by detection means 36' which are not shown in the figures (which comprise, inter alia, code detection means) and which recognize said code yyy related to exchange 3 by means of a processor 34' not shown in the figures, for example by comparing the code yyy related to exchange 3 as digital pulses with permanently stored pulses. After this recognition, the digits xxxxx are fed, under the control of the processor 34', not shown in the figures, to memory 9, which, in response thereto, generates the internal number of exchange 1, which number is stored at the location associated with the digits xxxxx and indicates via which link in connection 5 and distributor 30 the first party 6 is connected. Said internal number of exchange 1 is transmitted to exchange 3, together with the digits xxxxx and the code yyy related to exchange 3 under the control of the processor 34', not shown in the figures, via a data link in connection 13. In exchange 3, the code yyy related to exchange 3 is detected (either by the means 37'' not shown in the figures or by the detection means 36'' not shown in the figures), after which the connection set up so far (characterized by the digits xxxxx, on the basis of which digits xxxxx the link in connection 16 via which telepoint base station 17 is connected to exchange 3 is stored in a memory 35'' not shown in the figures) is routed through from exchange 3 by means of means 37'' not shown in the figures and the first party 6 is connected to exchange 1, under the control of the processor 34'' not shown in the figures, on the basis of the internal number which indicates via which link in connection 5 and distributor 30 the first party is connected to exchange 1. In exchange 1, the last section of the connection between first party 6 and communication handset 19 is then set up, after which first party 6 and the second party are able to speak to one another, and all the costs might be allocated to first party 6, without an internal network number being disclosed to first party 6 or to the second party.

Instead of indicating via which link in connection 5 and distributor 30 the first party 6 is connected to exchange 1, the internal number of exchange 1 might also only define exchange 1, in which case the information, via which link in connection 5 and distributor 30 the first party 6 is connected to exchange 1, should be stored in memory 35, for example, on the basis of the digits xxxxx. In this last case, the digits xxxxx together with the internal number of exchange 1 should be concomitantly transmitted during the routing through from exchange 3 to exchange 1.

The code detection means associated with detection means 36 (and 36' and 36'') and means 37 (and 37' and 37'') are situated in exchanges 1, 2 and 3. The two means may each be sited in a telepoint base station which should be provided with a processor for controlling said means. Preferably, the two means are situated in the vicinity of one another. This last remark applies also to the two identification detection means associated with detection means 36 (and 36' and 36'') and to link detection means. In one embodiment, all the means associated with detection means 36 (and 36' and 36'') and means 37 (and 37' and 37'') are implemented in software form via a processor already present.

Instead of making use of the code yyy related to exchange 3 for transmitting the digits xxxxx from exchange 3 to exchange 2 via a data link in connection 13 and for transmitting the internal number and the digits xxxxx from exchange 2 to exchange 3 via the data link in connection 13, it is, of course, also possible to transmit all of these things without such a code yyy related to exchange 3, for example by using one particular time slot of said data link, exchanges thus having to be informed about which time slot is associated with which information stream.

If the identification signal consists of a fixed telephone number aaa-bbbbbbb and of codes to be dialled by first party 6, such as the code xxxxx (which indicates which communication handset 19 should be called), a code ccc-ddddddd (which indicates, for example, the telephone number of first party 6) and a code zz (which indicates, for example, that first party 6 wishes to be accessed at an advanced level, for example because the first party intends to keep the connection between the first party and the exchange open, which code zz thus corresponds to an indication signal), exchange 4 will again only be capable of routing through said identification signal received via link 7 to exchange 1 via a link in connection 5. In exchange 1, the fixed telephone number aaa-bbbbbbb is recognized by detection means 36 (which comprise, inter alia, identification detection means) via distributor 30 and processor 34, for example by comparing said number as digital pulses with permanently stored pulses, and the code zz is recognized by detection means 36 via distributor 30 and processor 34, for example by comparing said code zz as digital pulses with permanently stored pulses. After said recognition, the code xxxxx, the code ccc-ddddddd and the code zz are transmitted to exchange 2 via bus 33 and distributor 31 under the control of processor 34 via a data link of connection 8, together with, for example, an internal number of exchange 1 which indicates via which link in connection 5 and distributor 30 the first party 6 is connected. In exchange 2, said internal number and the code xxxxx are fed, under the control of the processor 34' not shown in the figures, via a data link in connection 10 to memory 9, where the internal number is stored, for example, at location xxxxx. Furthermore, the code xxxxx, the code ccc-ddddddd and the code zz are fed, under the control of a processor 34' not shown in the figures, via a data link in connection 12 to paging transmitter 11, which transmits the paging signal intended for paging receiver 40. Said paging signal comprises the code xxxxx for identifying paging receiver 40, the code ccc-ddddddd and the code zz.

Paging receiver 40 in communication handset 19 then receives said paging signal and filters the code xxxxx (and the code ccc-ddddddd) out of the paging signal, after which it is established by comparison whether said paging signal is intended for said paging receiver 40. If this is the case, the sema-phone signal is fed to indication detection means 41 which filter the code zz out of the paging signal, after which it is established by comparison whether the code zz has a certain value. Indicator means 42, such as, in this case for example, a display, show the telephone number of first party 6 in response to the code ccc-ddddddd and show, in response to the code zz, a certain symbol which indicates that said code zz has a certain value. Code zz is furthermore fed to generating means 43 which, in response to the particular value of the code zz, generate a code signal of another type. In the case of said code signal of another type (namely, first party 6 wishes to be accessed at an advanced level), the code *56 is, for example, automatically generated, after which the code signal of another type is transmitted by means of processor 44 via transmitting/receiving means 41. Said code signal of another type then comprises, for example, the code *56 dialled by the second party together with, for example, identification information originating from memory 45, such as for example the code xxxxx, etc.

In the operation described above, it has been assumed that first party 6 remains connected to exchange 1 during the setting-up of the communication connection. This maintenance of connection is detected by the link detection means or because first party 6 generates the code zz. After the identification signal of another type has been generated by first party 6, there is, however, also the possibility that first party 6 breaks the connection to exchange 1, and a communication connection is then nevertheless set up with second party 19 without the latter being informed of the internal network number of the exchange 1 and of the number of first party 6. This takes place by first party 6 arranging, for example, for the fixed telephone number aaa-bbbbbbb and the codes xxxxx and zz to be generated again and by then feeding not the internal number of exchange 1 but, instead thereof, the number of first party 6 and the code xxxxx to memory 9 and by storing the number of first party 6 at location xxxxx. All these features have the result that the communication connection is set up from telepoint base station 17 via exchange 3 and, after memory 9 has been read out, via exchange 1 between second party 19 and the first party 6 warned by an alarm signal. The meaning of code zz (that first party 6 is or is not to be accessed at an advanced level) might thus be extended, for example, by standardization to include a meaning relating to the connection between first party 6 and exchange remaining or not remaining open, but it is also conceivable that the code zz is split up into a code zz1 and a code zz2. As described earlier, this remaining or not remaining open of the connection might also be detected by the exchange, in which case no splitting-up of the code zz and/or extension of the meaning thereof is necessary.

Instead of the special data links in the connections, use might also be made of standard links which are intended for telephone traffic, for example by using modems or by using special internal telephone numbers and codes associated therewith, or use might be made of links associated with a signalling network.

If the method according to the invention, the telecommunication system according to the invention and the receiving device according to the invention are applied in an analog environment, certain analog signals should be converted into digital signals at points known to the person skilled in the art by conversion and/or interpretation, in which connection use might be made, for example, of the contents of Dutch Patent Application 9301094.

## Claims

1. Method for setting up a communication connection between a first party and a callable second party, which second party is provided with a radio-communication handset, which method comprises the following steps of
- receiving an identification signal for identifying the radio-communication handset from the first party via an exchange,
- storing a relationship between the radio-communication handset and at least a section of a link situated between the first party and the exchange at a location in a memory in response to at least a section of the identification signal,
- activating a call transmitter for transmitting a call signal to the radio-communication handset in response to at least a section of the identification signal,
- receiving a code signal via a telepoint base station from the radio-communication handset, and
- setting up a connection between the telepoint base station and the exchange in response to the code signal,
characterized in that the method comprises the following steps of consecutively
- reading out the location in the memory in response to the code signal and
- setting up the connection between the telepoint base station and the exchange in response to the relationship.

2. Method according to Claim 1, characterized in that the call signal comprises an indication signal of one type in the case of an identification signal of one type, which call signal comprises an indication signal of another type in the case of an identification signal of another type.

3. Method according to Claim 1 or 2, characterized in that the relationship is formed by a representation of at least a section of the link situated between the first party and the exchange, the location in the memory being determined by at least a section of the identification signal.

4. Telecommunication system comprising at least one exchange, at least one call transmitter coupled to the exchange, at least one telepoint base station coupled to the exchange and at least one memory, a first party being capable of being coupled to the exchange via a link and a callable second party who is provided with a radio-communication handset being capable of being coupled to the telepoint base station, which telecommunication system is provided with identification detection means for
- detecting an identification signal originating from the first party for identifying the radio-communication handset,
- storing a relationship between the radio-communication handset and at least a section of the link situated between the first party and the exchange at a location in the memory in response to at least a section of the identification signal,
- activating the call transmitter for transmitting a call signal to the radio-communication handset in response to at least a section of the identification signal,
and which telecommunication system is provided with code detection means for
- detecting a code signal originating from the radio-communication handset, and
- setting up a connection between the telepoint base station and the exchange in response to at least a section of the code signal,
characterized in that the telecommunication system is provided with means for consecutively
- reading out the location in the memory in response to the detection of the code signal and
- setting up the connection between the telepoint base station and the exchange in response to the relationship.

5. Telecommunication system according to Claim 4, characterized in that the telecommunication system is provided with indication signal generating means for
- generating, in the case of a detected identification signal of one type, an indication signal, associated with the call signal, of one type,
- generating, in the case of a detected identification signal of another type, an indication signal, associated with the call signal, of another type.

6. Telecommunication system according to Claim 4 or 5, characterized in that the relationship is a representation of at least a section of the link between the first party and the exchange, the location in the memory being determined by at least a section of the identification signal.

7. A radio-communication handset provided with a call function comprising
- transmitting/receiving means for radio communication with a telepoint base station and for transmitting a code signal to the telepoint base station and
- receiving means for receiving a call signal,
characterized in that the radio-communication handset provided with a call function is provided with indication detection means for detecting an indication signal, associated with the call signal, of one type and for detecting an indication signal, associated with the call signal, of another type.

8. Radio-communication handset provided with a call function according to Claim 7, characterized in that the radio-communication handset provided with a call function is provided with indicator means for indicating, in the case of a detected indication signal of one type, said indication signal of one type and for indicating, in the case of a detected indication signal of another type, said indication signal of another type.

9. Radio-communication handset provided with a call function according to Claim 7 or 8, characterized in that the radio-communication handset provided with a call function is provided with generating means for generating, in response to an indication signal of one type, the code signal of one type and for generating, in response to an indication signal of another type, the code signal of another type.
